# EUROPEAN PATENT SPECIFICATION

(11) **EP 2 602 273 B1**
(45) Date of publication and mention of the grant of the patent: **23.10.2019**
(21) Application number: 11814354.4
(22) Date of filing: 24.05.2011
(51) Int. Cl.: B32B 27/12, C08G 18/66, C08G 18/75, C09D 5/28, C08G 18/08, C09D 175/04, B32B 7/12, D06N 3/00, C08G 18/48, C08G 18/44, D06N 3/14, B32B 27/40

(54) **URETHANE RESIN COMPOSITION, COATING AGENT, URETHANE RESIN COMPOSITION FOR FORMING SURFACE LAYER OF LEATHER-LIKE SHEET, LAMINATE, AND LEATHER-LIKE SHEET**
URETHANHARZZUSAMMENSETZUNG, BESCHICHTUNGSBILDNER, URETHANHARZZUSAMMENSETZUNG ZUR BILDUNG EINER OBERFLÄCHENSCHICHT EINER LEDERÄHNLICHEN FOLIE, LAMINAT UND LEDERÄHNLICHE FOLIE
COMPOSITION DE RÉSINE D'URÉTHANE, AGENT DE REVÊTEMENT, COMPOSITION DE RÉSINE D'URÉTHANE POUR LA FORMATION D'UNE COUCHE DE SURFACE DE FEUILLE DE TYPE CUIR, STRATIFIÉ ET FEUILLE DE TYPE CUIR

(30) Priority: 06.08.2010 JP 2010177350
(43) Date of publication of application: 12.06.2013
(73) Proprietor: DIC Corporation, Tokyo 174-8520 (JP)
(72) Inventor: CHIYONOBU Kazuhiko, Takaishi-shi Osaka 592-0001 (JP); TANAKA Hiroki, Takaishi-shi Osaka 592-0001 (JP); GOTOH Naotaka, Takaishi-shi Osaka 592-0001 (JP); UEGUCHI Miwa, Takaishi-shi Osaka 592-0001 (JP)
(74) Representative: Adam, Holger
(86) International application number: PCT/JP2011/061846
(87) International publication number: WO 2012/017724

(56) References cited:
- EP-A1- 1 951 784
- WO-A1-2005/010068
- WO-A1-2009/143977
- GB-A- 2 386 898
- JP-A- 10 120 757
- JP-A- 11 043 529
- JP-A- 60 059 178
- JP-A- 2001 114 859
- JP-A- 2001 214 374
- JP-A- 2006 274 096
- JP-A- 2008 208 386
- JP-B2- 2 967 540

## Description

### Technical Field

The present invention relates to a leather-like sheet formed by using a urethane resin composition forming surface skin layers.

### Background Art

Since urethane resins can form cured products such as films and the like, which have relatively good flexibility, the urethane resins are used for various applications such as a coating agent.

The coating agent, particularly the coating agent used for surface coating of various substrates to form surface skin layers, is generally required to be capable of forming films having durability such as moisture-heat resistance, hydrolysis resistance, and the like. In addition, besides the durability and the like, various characteristics such as secondary adhesiveness, adhesion, and the like have recently been required with widening of the application range of the coating agent.

For example, in a manufacture location of shoes, bags, or the like, the secondary adhesiveness is a characteristic required when a pattern member or the like, which is intended to impart a design, is bonding, with an adhesive, to a surface of a film formed using the coating agent or when a putty material or the like, which is composed of a thermoplastic urethane resin, is directly applied to a surface of the film to form a pattern or the like on the surface.

Specifically, in general, the above-described film often has low surface polarity, and thus even when the adhesive, putty material, or the like is applied to the film surface and cured, peeling may occur over time at an interface between the film surface and the adhesive, the putty material, or the like. In this case, the secondary adhesiveness is a characteristic that even when the adhesive or putty material is applied and cured, peeling does not occur over time at the interface with the film surface.

In addition, the adhesion required for the coating agent is a characteristic that when the coating agent is applied to form films on surfaces of substrates composed of various materials, strong adhesion to the substrates can be achieved.

Therefore, in recent years, the coating agent has been required to be capable of forming films having excellent secondary adhesiveness in a level in which when the adhesive, the putty material, or the like is applied, peeling does not occur over time between the adhesive or the like and the film formed using the coating agent, excellent adhesion to substrates or the like, and excellent durability such as moisture-heat resistance, hydrolysis resistance, and the like.

Known examples of the coating agent include two-component polyurethane coating materials each containing specified amounts of a specified crosslinking agent, a specified dilution solvent, and an isocyanate-terminated prepolymer produced by reacting tolylenediisocyanate with at least one selected from bisphenol A propylene oxide adduct polyol, polyoxypropylene polyol, polyoxyethylene propylene polyol, and polyoxytetramethylene glycol. It is known that the two-component polyurethane coating materials can form continuous films having excellent surface finishing properties and the like (refer to, for example, JP 2007-253147 A, JP S60-59178 A, JP H10-120757 A, WO 2005/010068 A1, JP H11-43529, and JP 2001-114859 A). Among further prior art, JP 2006-274096 A discloses an aqueous dispersion of a composite resin of a urethane resin and an acrylic resin which is made into a coating film, JP 2008-208386 A discloses a polyol component having excellent workability and physical properties, which comprises a low mono-ol polyoxypropylene polyol. Furthermore, JP 2001-214374 A discloses a fabric having durable water repellency obtained by heating, melting and attaching by pressure a thermoplastic polyurethane resin. Moreover, GB 2 386 898 A discloses an aqueous polyurethane dispersion obtained by the reaction of an isocyanate-terminated prepolymer formed from components which comprise polyol(s) containing ionic or potentially ionic water-dispersing groups having two or more isocyanate-reactive groups. Furthermore, WO 2007/061445 A discloses polyurethane compositions comprising polymeric glycols and poly(tetramethylene-co-ethyleneether) glycols, and their use in spandex. Moreover, JP 2 967 540 B2 discloses that a polyol composed of a random copolymer prepared by copolymerisation of ethylene oxide and tetrahydrofuran can be reacted with a polyisocyanate in the presence of a chain-linked agent and the resultant polyurethane resin is subjected to film forming.

However, films formed using the coating materials are still unsatisfactory in secondary adhesiveness, and thus peeling may occur over time between the films formed using the coating materials and the adhesive or the like. In particular, when a thermoplastic urethane resin composition is used as the pattern member or the patty material, peeling from the film surfaces may occur over time.

In addition, the coating materials are one step short of a practical level with respect to adhesion and durability such as moisture-heat resistance, hydrolysis resistance, and the like in addition to the secondary adhesiveness.

### Summary of Invention

### Technical Problem

A problem to be solved by the present invention is to provide a leather-like sheet wherein a urethane resin composition capable of forming cured products such as a film having secondary adhesiveness in a level in which even when an adhesive, various putty materials, or the like is applied in order to bond a pattern member composed of, for example, a thermoplastic urethane resin or the like, peeling does not occur over time at an interface between the adhesive, the putty materials, or the like and a surface of the film, excellent adhesion to various substrates, and excellent durability such as moisture-heat resistance, hydrolysis resistance, and the like.

### Solution to Problem

During research to solve the problem, as a result of research of various polyol combinations constituting urethane resins, the inventors found that the problem of the present invention can be solved by the leather-like sheet according to claim 1.

In particular, the leather-like sheet of the present invention is formed using a urethane resin composition containing a urethane resin (C) produced by reacting a polyol (A) with a polyisocyanate (B), the polyol (A) containing a polyether polyol (a1) which has an oxyethylene structure (a1-1) and an oxyalkylene structure (a1-2) other than the oxyethylene structure (a1-1), wherein said oxyalkylene structure (a1-2) other than the oxyethylene structure (a1-1) is an oxytetramethylene structure, a polyoxytetramethylene glycol (a2), and/or a polycarbonatediol (a3), wherein the mass ratio [(a1-1)/(a1-2)] of the oxyethylene structure (a1-1) to the oxyalkylene structure (a1-2) in the polyether polyol (a1) is in a range of 3/7 to 9/1, and the ratio by mass of the polyether polyol (a1) is 10% by mass to 50% by mass based on the total amount of the polyol (A).

Further, the present disclosure relates to a laminate including a film formed on a surface of a substrate by using a coating agent for forming a topcoat layer.

The present invention relates to a leather-like sheet according to claim 1, including a fibrous substrate layer, a surface skin layer formed by using the urethane resin composition for forming a surface skin layer, and, if required, an intermediate layer disposed between the fibrous substrate layer and the surface skin layer.

### Advantageous Effects of Invention

A urethane resin composition used for the production of the present invention can form a film which satisfies secondary adhesiveness in a level in which even when a pattern member composed of, for example, a thermoplastic urethane resin or the like is bonded to a surface of the film or when various adhesives, putty materials, or the like are applied to a surface of the film, peeling does not occur over time at an interfaces between the film surface and the pattern member, the adhesives, the putty materials, or the like due to the low polarity of the film surface, adhesion to various substrate, and durability such as moisture-heat resistance and hydrolysis resistance. Therefore, the urethane resin composition can be used for, for example, a coating agent and a coating agent for forming a topcoat layer. In particular, the urethane resin composition is used for forming a surface skin layer constituting a laminate as the leather-like sheet.

### Description of Embodiments

A urethane resin composition used for the leather-like sheet according to the present invention contains a urethane resin (C) produced by reacting a polyol (A) with a polyisocyanate (B), the polyol (A) containing a polyether polyol (a1) which is produced by polymerizing an oxyethylene structure (a1-1) and an oxyalkylene structure (a1-2) other than the oxyethylene structure (a1-1), wherein said oxyalkylene structure (a1-2) other than the oxyethylene structure (a1-1) is an oxytetramethylene structure, a polyoxytetramethylene glycol (a2) and/or a polycarbonatediol (a3), and if required contains other additives. The polyether polyol (a1) is produced by polymerizing the oxyethylene structure (a1-1) and the oxyalkylene structure (a1-2) so that the ratio by mass [(a1-1)/(a1-2)] is within a range of 3/7 to 9/1, and the ratio by mass of the polyether polyol (a1) is 10% by mass to 50% by mass relative to the total amount of the polyol (A).

Although a composition containing the urethane resin (C) can be used as said urethane resin composition, a solution or dispersion of the urethane resin (C) in a solvent is used in view of improvement in handleability and coating workability, wherein said solvent is an aqueous medium.

As the solvent, an aqueous medium is used in view of decrease in environmental loading. In the use of the aqueous medium as the solvent, the urethane resin (C) having a hydrophilic group which is an anionic group is used for imparting good dispersion stability.

In order to solve the problem of the present invention, as described above, it is important for the urethane resin composition used in the present invention to use the urethane resin (C) produced using the specified polyether polyol (a1) as the essential component in combination with at least one selected from the group consisting of the polyoxytetramethylene glycol (a2) and the polycarbonatediol (a3), i.e., one or both of the polyoxytetramethylene glycol (a2) and the polycarbonatediol (a3).

A film formed using a composition containing, instead of the urethane resin (C), a urethane resin produced without using the polyether polyol (a1) has low surface polarity, and thus when an adhesive or the like is applied to a surface of the film, peeling may occur over time at the interface between the film and the adhesive or the like, thereby causing unsatisfactory secondary adhesiveness. In addition, a film formed using a composition containing, instead the urethane resin (C), a urethane resin produced using only the polyether polyol (a1) without using either the polyoxytetramethylene glycol (a2) or the polycarbonatediol (a3) also may be unsatisfactory in secondary adhesiveness and adhesion and unsatisfactory in durability such as moisture-heat resistance and hydrolysis resistance.

In addition, the urethane resin (C) is used in combination with the above solvent for the urethane resin composition used for the leather-like sheet of the present invention, and the solvent is an aqueous medium, and a urethane resin containing a hydrophilic group which is an anionic group is used as the urethane resin (C) from the viewpoint of imparting good dispersion stability to the urethane resin composition.

Examples of the anionic group which can be used include a carboxyl group, a carboxylate group, a sulfonic acid group, and a sulfonate group. Among these, the carboxylate groups or sulfonate groups which are partially or entirely neutralized with a basic compound or the like are preferably used for producing a composite resin having good water dispersibility.

Examples of the basic compound which can be used for neutralizing the anionic group include organic amines such as ammonia, triethylamine, pyridine, morpholine, and the like; alkanolamines such as monoethanolamine; and metallic basic compounds containing Na, K, Li, Ca, or the like.

When the carboxylate group or sulfonate group is used as the anionic group, the group is preferably present within a range of 50 to 1000 mmol/kg based on the whole of the urethane resin (C) in order to maintain good water dispersion stability of the urethane resin (C).

In addition, the urethane resin (C) used in the leather-like sheet formed according to the present invention preferably has a weight-average molecular weight within a range of 10,000 to 1,000,000, more preferably 50,000 to 800,000, in view of formation of a film having excellent durability such as moisture-heat resistance and hydrolysis resistance.

The urethane resin (C) is produced by reacting the polyol (A) with the polyisocyanate (B).

As the polyol (A), the polyether polyol (a1) is used as an essential component in combination with one or both of the polyoxytetramethylene glycol (a2) and the polycarbonatediol (a3).

As the polyether polyol (a1), a polyether polyol composed of an oxyethylene structure (a1-1) and an oxyalkylene structure (a1-2) other than the oxyethylene structure (a1-1), wherein said oxyalkylene structure (a1-2) is an oxytetramethylene structure, is used. The oxyethylene structure (a1-1) is a structure represented by chemical formula (1) below.
[Chem. 1]

**(̵H₂CH₂O)̵** **(1)**

As the oxyalkylene structure (a1-2), an oxytetramethylene structure is used as the oxyalkylene structure (a1-2) in order to produce a urethane resin composition capable of forming a film which satisfies both the durability such as moisture-heat resistance, hydrolysis resistance and the secondary adhesiveness and adhesion.

It is important to use the polyether polyol (a1) composed of the oxyethylene structure (a1-1) and said other oxyalkylene structure (a1-2) at a mass ratio [(a1-1)/(a1-2)] in a range of 3/7 to 9/1.

When a polyether polyol having the mass ratio of 2/8 is used instead of the polyether polyol (a1), a film is decreased in surface polarity and is thus unsatisfactory in secondary adhesiveness and adhesion between the film and a substrate and, for example, peeling may occur over time at an interface between the film and an adhesive, a putty material, or the like. In addition, when a polyether polyol having the mass ratio of 10/0 is used, a film having sufficient durability such as hydrolysis resistance and the like may not be formed. Therefore, in the present invention, the polyether polyol (a1) having the mass ratio in the range of 4/6 to 6/4 is preferably used.

In addition, in order to exhibit the advantages of the present invention, it is important to use the polyether polyol (a1) within a range of 10% by mass to 50% by mass based on the total amount of the polyol (A).

Further, a urethane resin composition containing, instead of the urethane resin (C), a urethane resin produced by using about 5% by mass of the polyether polyol (a1) may not form a film having good secondary adhesiveness and adhesion. In addition, in the use of about 60% by mass of the polyether polyol (a1), a urethane resin having excellent durability in addition to the excellent secondary adhesiveness and adhesion may not be formed.

Therefore, the urethane resin (C) produced by using the polyether polyol (a1) within the range of 10% by mass to 50% by mass, preferably in the range of 10 to 40% by mass, based on the total amount of the polyol (A) is used.

As the polyether polyol (a1), either a random polymer composed of the oxyethylene structure (a1-1) and the oxyalkylene structure (a1-2) which is an oxytetramethylene structure, or a block polymer composed of a polyoxyethylene structure having the oxyethylene structure (a1-1) and a polyoxyalkylene structure having the oxyalkylene structure (a1-2) can be used, but the random polymer is preferably used.

For example, the polyether polyol (a1) produced by ring-opening addition polymerization of ethylene oxide and alkylene oxide other than the ethylene oxide, if required, in the presence of an initiator can be used.

As the ethylene oxide, a cyclic ether represented by the chemical formula C₂H₄O can be used, and its ring is opened by reaction with the alkylene oxide or another ethylene oxide to form polyether polyol in which an oxyethylene structure represented by the chemical formula (1) is introduced.

Examples of the other alkylene oxide which can react with the ethylene oxide and which can be used for forming the oxyalkylene structure (a1-2) include propylene oxide, butylene oxide, styrene oxide, γ-chloropropylene oxide (epichlorohydrin), tetramethylene oxide (tetrahydrofuran), and the like. In particular, propylene oxide and tetramethylene oxide (tetrahydrofuran) are preferably used as the alkylene oxide in order to produce the urethane resin composition which can form a film satisfying both the durability such as moisture-heat resistance, hydrolysis resistance, and the like and the secondary adhesiveness and adhesion.

Examples of an initiator which can be used for producing the polyether polyol (a1) include active hydrogen atom-containing compounds such as ethylene glycol, propylene glycol, butanediol, 1,6-hexanediol, neopentyl glycol, cyclohexanediol, cyclohexanedimethanol, glycerin, trimethylolpropane, trimethylolethane, hexanetriol, pentaerythritol, sorbitol, mannitol, sorbitan, diglycerine, dipentaerythritol, and the like.

The polyether polyol (a1) can be produced by, for example, addition polymerization of the ethylene oxide and the other alkylene oxide using as the initiator the active hydrogen atom-containing compound such as a low-molecular-weight polyol, polyamine, or the like.

Specifically, the polyether polyol (a1) can be produced by supplying the ethylene oxide and the other alkylene oxide in coexistence of the initiator and a catalyst such as boron trifluoride or the like, and performing ring-opening addition polymerization. The ethylene oxide and the other alkylene oxide may be supplied separately or may be supplied as a mixture previously prepared by mixing the ethylene oxide and the other alkylene oxide.

When the block copolymer composed of the polyethylene oxide and the other polyalkylene oxide is used as the polyether polyol (a1), the block copolymer composed of the polyethylene oxide and the other polyalkylene oxide can be produced by supplying the ethylene oxide in coexistence of the catalyst and the initiator, performing ring-opening addition polymerization to form polyethylene oxide, and then supplying the alkylene oxide and the polyalkylene oxide previously produced using the alkylene oxide and polymerizing them.

The polyether polyol (a1) having a weight-average molecular weight in a range of 500 to 5,000 is preferably used. In particular, in view of formation of a film satisfying both more excellent durability and the secondary adhesiveness and adhesion, the polyether polyol (a1) having a weight-average molecular weight in a range of 1,000 to 3,000 is preferably used.

The polyol used in combination with the polyether polyol (a1) is one or both of the polyoxytetramethylene glycol (a2) and the polycarbonatediol (a3).

The polyoxytetramethylene glycol (a2) produced by, for example, ring-opening polymerization of tetramethylene oxide (tetrahydrofuran) in the presence of a catalyst such as boron fluoride and the initiator can be used.

The polyoxytetramethylene glycol (a2) having a weight-average molecular weight of 500 to 5,000 is preferably used. In particular, in view of formation of a film satisfying both more excellent durability and the secondary adhesiveness and adhesion, the polyoxytetramethylene glycol (a2) having a weight-average molecular weight of 500 to 3,000 is preferably used.

The polycarbonatediol (a3) produced by, for example, reacting polyol with carbonate and phosgene can be used.

Examples of the carbonate which can be used include methyl carbonate, dimethyl carbonate, ethyl carbonate, diethyl carbonate, cyclocarbonate, diphenyl carbonate, and the like.

Examples of the polyol which can react with the carbonate include dihydroxy compounds with relatively low molecular weight, such as ethylene glycol, diethylene glycol, triethylene glycol, 1,2-propylene glycol, 1,3-propylene glycol, dipropylene glycol, 1,4-dibutanediol, 1,3-butanediol, 1,2-butanediol, 2,3-butanediol, 1,5-pentanediol, 1,5-hexanediol, 2,5-hexanediol, 1,6-hexanediol, 1,7-heptanediol, 1,8-octanediol, 1,9-nonanediol, 1,10-decanediol, 1,11-undecanediol, 1,12-dodecanediol, 3-methyl-1,5-pentanediol, 2-ethyl-1,3-hexanediol, 2-methyl-1,3-propanediol, 2-methyl-1,8-octanediol, 2-butyl-2-ethylpropanediol, 2-methyl-1,8-octanediol, neopentyl glycol, 1,4-cyclohexanediol, 1,4-cyclohexanedimethanol, hydroquinone, resorcin, bisphenol-A, bisphenol-F, 4,4'-biphenol, and the like; polyether polyols such as polyethylene glycol, polypropylene glycol, polyoxytetramethylene glycol, and the like; polyester polyols such as polyhexamethylene adipate, polyhexamethylene succinate, polycaprolactone, and the like.

The polyoxytetramethylene glycol (a2) and the polycarbonatediol (a3) are preferably used within a range of 45% by mass to 85% by mass, more preferably within a range of 50% by mass to 80% by mass, based on the total amount of the polyol (A).

In addition, the mass ratio [(a1)/{(a2) + (a3)}] of the polyether polyol (a1) to the polyoxytetramethylene glycol (a2) and the polycarbonatediol (a3) is preferably in a range of 1/9 to 5/5 in order to form a film having the excellent secondary adhesiveness and adhesion and the durability such as moisture-heat resistance, hydrolysis resistance, and the like.

Since a urethane resin containing an anionic group is used as the urethane resin (C), in addition to the polyether polyol (a1), the polyoxytetramethylene glycol (a2) and/or the polycarbonatediol (a3), an anionic group-containing polyol is used as the polyol (A).

Examples of the anionic group-containing polyol which can be used include those not belonging to any one of the (a1) to (a3), for examples, carboxyl group-containing polyols such as 2,2'-dimethylolpropionic acid, 2,2'-dimethylolbutanoic acid, 2,2'-dimethylolbutyric acid, 2,2'-dimethylolvaleric acid, and the like; and sulfonic acid group-containing polyols such as 5-sulfoisophthalic acid, sulfoterephthalic acid, 4-sulfophthalic acid, 5[4-sulfophenoxy]isophthalic acid, and the like. Also, a hydrophilic group-containing polyester polyol and the like, which are produced by reacting the low-molecular-weight hydrophilic group-containing polyol with, for example, polycarboxylic acids such as adipic acid, can be used as the hydrophilic group-containing polyol.

The hydrophilic group-containing polyol is preferably used within a range of 0.5% by mass to 10% by mass, more preferably within a range of 1% by mass to 5% by mass, based on the total amount of the polyol (A).

In addition to the polyether polyol (a1), the polyoxytetramethylene glycol (a2), the polycarbonatediol (a3), and the hydrophilic group-containing polyol, another polyol can be combined as the polyol (A).

Examples of the other polyol which can be used include polyether polyol, polyester polyol, and the like other than the (a1) and (a2).

The other polyether polyol, for example, having the oxyethylene structure (a1-1) and the oxyalkylene structure (a1-2) at a mass ratio [(a1-1)/(a1-2)] out of the range of 3/7 to 9/1, and the other polyether polyol, for example, not having the oxyethylene structure (a1-1) can be used.

The other polyether polyol can be produced by using the same initiator and alkylene oxide as described above.

Examples of the polyester polyol which can be used include aliphatic polyester polyols and aromatic polyester polyols produced by esterification reaction of low-molecular-weight polyols and polycarboxylic acids, polyesters produced by ring-opening polymerization reaction of cyclic ester compounds such as ε-caprolactone and the like, copolymer polyesters thereof, and the like.

The polyisocyanate (B) which can react with the polyol (A) is an alicyclic structure-containing polyisocyanate selected from isophorone diisocyanate and dicyclohexylmethane diisocyanate. These can be used alone or in combination. Among these, the alicyclic structure-containing polyisocyanates are preferably used, and particularly, isophorone diisocyanate and dicyclohexylmethane diisocyanate are more preferably used.

The urethane resin (C) can be produced by, for example, mixing the polyol (A) and the polyisocyanate (B) in the presence of no solvent or an organic solvent and performing reaction at 50°C to 100°C for about 3 to 10 hours.

The reaction of the polyol (A) with the polyisocyanate (B) is preferably performed so that the equivalent ratio [isocyanate group/hydroxyl group] of isocyanate groups in the polyisocyanate (B) to hydroxyl groups in the polyol (A) is in a range of 0.8 to 1.1 and more preferably 0.9 to 1.0.

Examples of the organic solvent which can be used in producing the urethane resin (C) include ketones such as acetone, methyl ethyl ketone; ethers such as tetrahydrofuran, dioxane; acetates such as ethyl acetate, butyl acetate; nitriles such as acetonitrile; amides such as dimethylformamide and N-methylpyrrolidone. These can be used alone or in combination or two or more.

In producing the urethane resin (C), if required, a chain extender can be used. Specifically, the polyol (A) and the polyisocyanate (B) are mixed in the presence of no solvent or an organic solvent and reacted at 50°C to 100°C for about 3 to 10 hours to produce a urethane prepolymer having isocyanate groups at molecular ends, and then the urethane prepolymer is reacted with the chain extender to produce a urethane resin having a relatively high molecular weight and a urea bond.

As the chain extender, for example, polyamine or other active hydrogen atom-containing compounds can be used.

Examples of the polyamine include diamines such as ethylenediamine, 1,2-propanediamine, 1,6-hexamethylenediamine, piperazine, 2,5-dimethylpiperazine, isophoronediamine, 4,4'-dicyclohexylmethanediamine, 3,3'-dimethyl-4,4'-dicyclohexylmethanediamine, 1,4-cyclohexanediamine; diamines each containing one primary amino group and one secondary amino group, such as N-hydroxymethylaminoethylamine, N-hydroxyethylaminoethylamine, N-hydroxypropylaminopropylamine, N-ethylaminoethylamine, N-methylaminopropylamine, and the like; polyamines such as diethylenetriamine, dipropylenetriamine, triethylenetetramine; hydrazines such as hydrazine, N,N'-dimethylhydrazine, 1,6-hexamethylenebishydrazine; dihydrazides such as succinic acid dihydrazide, adipic acid dihydrazide, glutaric acid dihydrazide, sebacic acid dihydrazide, isophthalic acid dihydrazide; semicarbazides such as β-semicarbazide propionic acid hydrazide, 3-semicarbazide-propyl-carbazinic acid ester and semicarbazide-3-semicarbazidemethyl-3,5,5-trimethylcyclohexane.

Examples of the other active hydrogen-containing compound include glycols such as ethylene glycol, diethylene glycol, triethylene glycol, propylene glycol, 1,3-propanediol, 1,3-butanediol, 1,4-butanediol, hexamethylene glycol, saccharose, methylene glycol, glycerin, sorbitol; phenols such as bisphenol A, 4,4'-dihydroxydiphenyl, 4,4'-dihydroxydiphenyl ether, 4,4'-dihydroxydiphenylsulfone, hydrogenated bisphenol A, hydroquinone; and hydrogen. These can be used alone or in combination of two or more within a range where the storage stability of a coating agent of the present invention is not degraded.

From the viewpoint that a urea bond is introduced into a formed film and consequently further improves the durability of the film, the chain extender is preferably within a range of 1% by mass to 10% by mass and more preferably within a range of 1% by mass to 5% by mass based on the total amount of raw materials used for producing the urethane resin (C).

The urethane resin composition containing the urethane resin (C) and the aqueous medium can be produced by reacting, in the presence of no solvent of an organic solvent, the polyether polyol (a1) with at least one selected from the group consisting of the polyoxytetramethylene glycol (a2) and the polycarbonatediol (a3), the above polyol containing the anionic group-containing polyol, and the above-defined polyisocyanate (B) to produce a urethane resin, neutralizing hydrophilic groups, such as anionic groups, in the urethane resin according .to demand, and then supplying the aqueous medium to disperse the urethane resin (C) in the aqueous medium.

In producing the hydrophilic group-containing urethane resin, the chain extender can be used. Examples of the production method include a method in which the urethane resin is stably dispersed in the aqueous medium and then the chain extender is supplied to perform reaction, and a method in which the chain extender is supplied to perform reaction before the urethane resin is mixed with the aqueous medium.

When the urethane resin (C) is mixed with the aqueous medium, a machine such as a homogenizer or the like may be used.

Examples of an emulsifier include nonionic emulsifiers such as polyoxyethylene nonylphenyl ether, polyoxyethylene lauryl ether, polyoxyethylene styrylphenyl ether, polyoxyethylene sorbitol tetraoleate, polyoxyethylene-polyoxypropylene copolymers, and the like; anionic emulsifiers such as fatty acid salts such as sodium oleate and the like, alkylsulfuric acid ester salts, alkylbenzenesulfonic acid salts, alkylsulfosuccinic acid salts, naphthalenesulfonic acid salts, polyoxyethylenealkylsulfuric acid salts, alkanesulfonate sodium salts, alkyldiphenyl ether sulfonic acid sodium salts, and the like; and cationic emulsifiers such as alkylamine salts, alkyltrimethyl ammonium salts, alkyldimethylbenzyl ammonium salts, and the like.

The urethane resin composition of the present invention contains the urethane resin (C) which is dissolved or dispersed in a solvent, which is an aqueous medium.

Examples of the aqueous medium include water, organic solvents miscible with water, and mixtures thereof. Examples of the organic solvents miscible with water include alcohols such as methanol, ethanol, n- and iso-propanol; ketones such as acetone, methyl ethyl ketone; polyalkylene glycols such as ethylene glycol, diethylene glycol, propylene glycol; polyalkylene glycol alkyl ethers; and lactams such as N-methyl-2-pyrrolidone. In the present invention, only water, a mixture of water and an organic solvent miscible with water, or only an organic solvent miscible with water may be used. In view of safety and environmental loading, water alone or a mixture of water and an organic solvent miscible with water is preferred, and water alone is particularly preferred.

The urethane resin composition used in the present invention preferably contains the urethane resin (C) within a range of 10% by mass to 50% by mass and, in view of improvement in coating workability, contains 20% by mass to 50% by mass, based on the total amount of the urethane resin composition.

The urethane resin composition used in the present invention can also contain a crosslinking agent from the viewpoint of formation of a film excellent in durability such as moisture-heat resistance, hydrolysis resistance, and the like.

Examples of the crosslinking agent which can be used include generally known crosslinking agents such as a carbodiimide crosslinking agent, an oxazoline crosslinking agent, an epoxy crosslinking agent, an isocyanate crosslinking agent and a melamine crosslinking agent. In particular, the carbodiimide crosslinking agent and the oxazoline crosslinking agent are preferably used.

In view of an attempt to further improve durability, the crosslinking agent is preferably used in a range of 1 part by mass to 10 parts by mass based on 100 parts by mass of the urethane resin (C).

When the secondary adhesiveness and adhesion to the substrate are further improved, the amount of the crosslinking agent used is preferably in a range of 0 part by mass to 5 parts by mass and more preferably in a range of 0 part by mass to 1 part by mass based on 100 parts by mass of the urethane resin (C).

If required, the urethane resin composition used in the present invention may contain various additives besides the above-described components. Examples of the additives include an association-type thickener, a urethanization catalyst, a silane coupling agent, a filler, a thixotropy-imparting agent, a tackifier, wax, a thermal stabilizer, a light stabilizer, a fluorescent brightener, a foaming agent; a thermoplastic resin, a thermosetting resin, a pigment, a dye, a conductivity imparting agent, an antistatic agent, a moisture permeability improver, a water repellent, an oil repellent, a hollow foam, a crystal water-containing compound, a flame retardant, a water absorbent, a moisture absorbent, a deodorant, a foam stabilizer, an antifoaming agent, a fungicidal agent, an antiseptic agent, an anti-algae agent, a pigment dispersant, a anti-blocking agent, and an anti-hydrolysis agent.

Examples of the association-type thickener which can be used include cellulose derivatives such as hydroxyethyl cellulose, methyl cellulose, carboxymethyl cellulose; polyacrylic acid salts; polyvinylpyrrolidone; a urethane-based thickener; and a polyether-based thickener. Among these, the urethane-based thickener is preferably used because it has good compatibility with the urethane resin (C). The association-type thickener is preferably used within a range of 0.5% by mass to 5% by mass based on the total amount of the urethane resin (C).

The urethane resin composition can form a film excellent in the durability such as moisture-heat resistance, hydrolysis resistance, and the like, the secondary adhesiveness, and adhesion to substrates, and thus can be preferably used for a coating agent used for surface coating of various substrates, preferably a coating agent for forming topcoat layers.

According to the invention, the substrate for the fibrous substrate layer is a fibrous substrate such as a woven fabric, a nonwoven fabric; a leather-like sheet, a galvanized steel sheet, plated steel sheets such as an aluminum-zinc alloy steel sheet; further disclosed herein are metallic substrates such as an aluminum sheet, an aluminum alloy sheet, a magnetic steel sheet, a copper sheet, a stainless steel sheet; plastic substrates such as a polycarbonate substrate, a polyester substrate, an acrylonitrile-butadiene-styrene substrate, a polyacryl substrate, a polystyrene substrate, a polyurethane substrate, an epoxy resin substrate, a polyvinyl chloride-based substrate, a polyamide-based substrate; and glass substrates. A leather-like sheet, examples of which include synthetic leather, artificial leather used for processing into shoes or bags, is used as the substrate because the leather-like sheet with an excellent design can be efficiently produced by bonding another member with an adhesive or applying a patty or the like to a surface of the leather-like sheet.

A film can be formed by, for example, applying a coating agent directly to a surface of the substrate and then drying and curing the coating agent. A film can also be formed by applying the coating agent of the present disclosure to a surface of mold-release paper, drying and curing the coating agent, and then laminating the substrate on the coated surface. When the crosslinking agent is used, in order to maintain good coating workability, the crosslinking agent is preferably mixed with the urethane resin (C) etc. immediately before the coating agent is applied to the surface of the substrate.

Examples of a method for applying the coating agent to the substrate include a spray method, a curtain coater method, a flow coater method, a roll coater method, a brush coating method, an immersion method, and the like.

A method for performing drying and curing may be a method of curing at room temperature for about 1 to 10 days, but is preferably a method of heating at a temperature of 50°C to 250°C for about 1 second to 600 seconds from the viewpoint of rapidly progressing curing. When a plastic substrate easily deformed or discolored at a relatively high temperature is used, curing is preferably performed at a relatively low temperature of about 30°C to 100°C.

The thickness of the film formed using the coating agent of the present disclosure can be appropriately adjusted according to use of the substrate or the like, but is preferably about 0.5 µm to 100 µm.

When the urethane resin composition used in the present invention is used for the coating agent for forming a topcoat layer, an intermediate layer such as a primer layer or the like may be previously provided on the surface of the substrate. Examples of the primer layer include primer layers formed using generally known acryl resin-based coating material, polyester resin-based coating material, alkyd resin-based coating material, epoxy resin-based coating material, fatty acid-modified epoxy resin-based coating material, silicone resin-based coating material, polyurethane resin-based coating material, and the like.

As described above, a laminate including the substrate and the film laminated thereon and formed by using the coating agent of the present invention can be used for, for example, a cellular phone, home electric appliances, OA devices, automobile parts such as automobile interior and exterior materials, parts of various home electric appliances, construction material products, and the like.

Also, the urethane resin composition used in the leather-like sheet of the present invention is a material forming a surface skin layer constituting the leather-like sheet. The leather-like sheet generally may include the fibrous substrate impregnated with a resin according to demand, an intermediate layer such as a porous layer or the like laminated on a surface of the fibrous substrate according to demand, and a surface skin layer laminated on the intermediate layer. The urethane resin composition of the present invention forms the surface skin layer.

As the fibrous substrate, a nonwoven fabric, a woven fabric, a knit, and the like can be used. Examples of a material which can be used as a constituent of the substrate include polyester fibers, nylon fibers, acryl fibers, polyurethane fibers, acetate fibers, rayon fibers, polylactic acid fibers, cotton, hemp, silk, wool, blended fibers thereof, and the like.

If required, the surface of the substrate may be subjected to antistatic processing, mold-release treatment, water repellent processing, water absorption processing, antifungal-deodorization processing, fungistatic processing, ultraviolet screening, or the like.

The leather-like sheet including the fibrous substrate and the surface skin layer laminated directly on a surface of the substrate can be produced by, for example, applying the urethane resin composition on a sheet, which has been subjected to mold-release treatment, and drying the composition to form the surface skin layer, and then laminating the fibrous substrate on the surface skin layer using an adhesive. Examples of a method applying the urethane resin composition on the sheet include a gravure coater method, a knife coater method, a pipe coater method, and a comma coater method. A method for drying and curing the urethane resin composition applied by the above-described method is, for example, a method of heating at room temperature for about 1 day to 10 days or heating at a temperature of 50°C to 250°C for about 1 second or 600 seconds.

The leather-like sheet including the porous layer or the like provided as the intermediate layer between the fibrous substrate and the surface skin layer can be produced by, for example, applying the urethane resin composition on a sheet, which has been subjected to mold-release treatment, and drying the composition to form the surface skin layer, applying and curing a porous layer-forming resin composition foamed by a generally known mechanical foaming method, or water foaming method to form the porous layer, and then laminating the substrate on the porous layer using a conventional known adhesive.

As described above, the urethane resin composition used in the present invention can be preferably used for various coating agents and resin compositions for forming surface skin layers of various laminates, and forms the surface skin layer of the leather-like sheet of the present invention.

### EXAMPLES

The present invention is described in further detail below with reference to examples and comparative examples.

### [EXAMPLE 1]

In a four-neck flask provided with a stirrer, a reflux condenser, a thermometer, and a nitrogen blow tube, 400 parts by mass of polyoxytetramethylene glycol (weight-average molecular weight: 2000), 144 parts by mass of polyether polyol composed of a random polymer having an oxyethylene structure and an oxytetramethylene structure (weight-average molecular weight 1800, mass ratio [oxyethylene structure/oxytetramethylene structure] of the oxyethylene structure to the oxytetramethylene structure = 55/45), 13.4 parts by mass of dimethylolpropionic acid, and 380.7 parts by mass of methyl ethyl ketone were added under a nitrogen stream and then uniformly mixed. Then, 149.5 parts by mass of dicyclohexylmethane diisocyanate and 0.1 parts by mass of dibutyltin dilaurate were added in that order to the resultant mixture, followed by reaction at 80°C for about 4 hours. As a result, a methyl ethyl ketone solution of a urethane prepolymer (isocyanate group content: 1.5% by mass) having isocyanate groups at the molecular ends was produced.

Next, the methyl ethyl ketone solution of the urethane prepolymer produced by the above-described method was cooled to 40°C, and 10.1 parts by mass of triethylamine was added to neutralize carboxyl groups in the urethane prepolymer. Then, 1704 parts by mass of ion-exchange water and 29.1 parts by mass of isophoronediamine were added in that order to the solution, followed by reaction. After the completion of reaction, methyl ethyl ketone was distilled off under reduced pressure, and ion-exchange water was added so that the nonvolatile content was 35% by mass to produce urethane resin composition 1.

### [EXAMPLE 2]

In a four-neck flask provided with a stirrer, a reflux condenser, a thermometer, and a nitrogen blow tube, 300 parts by mass of polyoxytetramethylene glycol (weight-average molecular weight: 2000), 270 parts by mass of polyether polyol composed of a random polymer having an oxyethylene structure and an oxytetramethylene structure (weight-average molecular weight 1800, mass ratio [oxyethylene structure/oxytetramethylene structure] of the oxyethylene structure to the oxytetramethylene structure = 55/45), 10.1 parts by mass of dimethylolpropionic acid, 6.8 parts by mass of 1,4-butanediol, and 391 parts by mass of methyl ethyl ketone were added under a nitrogen stream and then uniformly mixed. Then, 140 parts by mass of isophorone diisocyanate and 0.1 parts by mass of dibutyltin dilaurate were added in that order to the resultant mixture, followed by reaction at 80°C for about 4 hours. As a result, a methyl ethyl ketone solution of a urethane prepolymer (isocyanate group content: 1.4% by mass) having isocyanate groups at the molecular ends was produced.

Next, the methyl ethyl ketone solution of the urethane prepolymer produced by the above-described method was cooled to 40°C, and 7.6 parts by mass of triethylamine was added to neutralize carboxyl groups in the urethane prepolymer. Then, 1748 parts by mass of ion-exchange water and 27.6 parts by mass of isophoronediamine were added in that order to the solution, followed by reaction. After the completion of reaction, methyl ethyl ketone was distilled off under reduced pressure, and ion-exchange water was added so that the nonvolatile content was 35% by mass to produce urethane resin composition 2.

### [EXAMPLE 3]

In a four-neck flask provided with a stirrer, a reflux condenser, a thermometer, and a nitrogen blow tube, 400 parts by mass of polyoxytetramethylene glycol (weight-average molecular weight: 3000), 72 parts by mass of polyether polyol composed of a random polymer having an oxyethylene structure and an oxytetramethylene structure (weight-average molecular weight 1800, mass ratio [oxyethylene structure/oxytetramethylene structure] of the oxyethylene structure to the oxytetramethylene structure = 55/45), 17.9 parts by mass of dimethylolpropionic acid, and 341.7 parts by mass of methyl ethyl ketone were added under a nitrogen stream and then uniformly mixed. Then, 144.8 parts by mass of dicyclohexylmethane diisocyanate and 0.1 parts by mass of dibutyltin dilaurate were added in that order to the resultant mixture, followed by reaction at 80°C for about 4 hours. As a result, a methyl ethyl ketone solution of a urethane prepolymer (isocyanate group content: 2.1% by mass) having isocyanate groups at the molecular ends was produced.

Next, the methyl ethyl ketone solution of the urethane prepolymer produced by the above-described method was cooled to 40°C, and 13.5 parts by mass of triethylamine was added to neutralize carboxyl groups in the urethane prepolymer. Then, 1505 parts by mass of ion-exchange water and 19 parts by mass of piperazine were added in that order to the solution, followed by reaction. After the completion of reaction, methyl ethyl ketone was distilled off under reduced pressure, and ion-exchange water was added so that the nonvolatile content was 35% by mass to produce urethane resin composition 3.

### [EXAMPLE 4]

In a four-neck flask provided with a stirrer, a reflux condenser, a thermometer, and a nitrogen blow tube, 400 parts by mass of polycarbonatediol (weight-average molecular weight: 2000), 72 parts by mass of polyether polyol composed of a random polymer having an oxyethylene structure and an oxytetramethylene structure (weight-average molecular weight 1800, mass ratio [oxyethylene structure/oxytetramethylene structure] of the oxyethylene structure to the oxytetramethylene structure = 55/45), 26.8 parts by mass of dimethylolpropionic acid, and 361.8 parts by mass of methyl ethyl ketone were added under a nitrogen stream and then uniformly mixed. Then, 173.1 parts by mass of dicyclohexylmethane diisocyanate and 0.1 parts by mass of dibutyltin dilaurate were added in that order to the resultant mixture, followed by reaction at 80°C for about 4 hours. As a result, a methyl ethyl ketone solution of a urethane prepolymer (isocyanate group content: 1.8% by mass) having isocyanate groups at the molecular ends was produced.

Next, the methyl ethyl ketone solution of the urethane prepolymer produced by the above-described method was cooled to 40°C, and 20.2 parts by mass of triethylamine was added to neutralize carboxyl groups in the urethane prepolymer. Then, 1564 parts by mass of ion-exchange water and 11.9 parts by mass of ethylenediamine were added in that order to the solution, followed by reaction. After the completion of reaction, methyl ethyl ketone was distilled off under reduced pressure, and ion-exchange water was added so that the nonvolatile content was 35% by mass to produce urethane resin composition 4.

### [EXAMPLE 5]

In a four-neck flask provided with a stirrer, a reflux condenser, a thermometer, and a nitrogen blow tube, 400 parts by mass of polyoxytetramethylene glycol (weight-average molecular weight: 2000), 144 parts by mass of polyether polyol composed of a random polymer having an oxyethylene structure and an oxytetramethylene structure (weight-average molecular weight 1800, mass ratio [oxyethylene structure/oxytetramethylene structure] of the oxyethylene structure to the oxytetramethylene structure = 75/25), 13.4 parts by mass of dimethylolpropionic acid, and 380.7 parts by mass of methyl ethyl ketone were added under a nitrogen stream and then uniformly mixed. Then, 149.5 parts by mass of dicyclohexylmethane diisocyanate and 0.1 parts by mass of dibutyltin dilaurate were added in that order to the resultant mixture, followed by reaction at 80°C for about 4 hours. As a result, a methyl ethyl ketone solution of a urethane prepolymer (isocyanate group content: 1.5% by mass) having isocyanate groups at the molecular ends was produced.

Next, the methyl ethyl ketone solution of the urethane prepolymer produced by the above-described method was cooled to 40°C, and 10.1 parts by mass of triethylamine was added to neutralize carboxyl groups in the urethane prepolymer. Then, 1704 parts by mass of ion-exchange water and 29.1 parts by mass of isophoronediamine were added in that order to the solution, followed by reaction. After the completion of reaction, methyl ethyl ketone was distilled off under reduced pressure, and ion-exchange water was added so that the nonvolatile content was 35% by mass to produce urethane resin composition 5.

### [COMPARATIVE EXAMPLE 1]

In a four-neck flask provided with a stirrer, a reflux condenser, a thermometer, and a nitrogen blow tube, 400 parts by mass of polyoxytetramethylene glycol (weight-average molecular weight: 2000), 100 parts by mass of polyoxyethylene glycol (weight-average molecular weight 1000, mass ratio [oxyethylene structure/oxytetramethylene structure] of oxyethylene structure to oxytetramethylene structure = 100/0), 16.1 parts by mass of dimethylolpropionic acid, and 355 parts by mass of methyl ethyl ketone were added under a nitrogen stream and then uniformly mixed. Then, 143.2 parts by mass of dicyclohexylmethane diisocyanate and 0.1 parts by mass of dibutyltin dilaurate were added in that order to the resultant mixture, followed by reaction at 80°C for about 4 hours. As a result, a methyl ethyl ketone solution of a urethane prepolymer (isocyanate group content: 1.0% by mass) having isocyanate groups at the molecular ends was produced.

Next, the methyl ethyl ketone solution of the urethane prepolymer produced by the above-described method was cooled to 40°C, and 12.1 parts by mass of triethylamine was added to neutralize carboxyl groups in the urethane prepolymer. Then, 1537 parts by mass of ion-exchange water and 9.8 parts by mass of piperazine were added in that order to the solution, followed by reaction. After the completion of reaction, methyl ethyl ketone was distilled off under reduced pressure, and ion-exchange water was added so that the nonvolatile content was 35% by mass to produce comparative urethane resin composition 1.

### [COMPARATIVE EXAMPLE 2]

In a four-neck flask provided with a stirrer, a reflux condenser, a thermometer, and a nitrogen blow tube, 400 parts by mass of polyoxytetramethylene glycol (weight-average molecular weight: 2000), 28.8 parts by mass of polyether polyol composed of a random polymer having an oxyethylene structure and an oxytetramethylene structure (weight-average molecular weight 1800, mass ratio [oxyethylene structure/oxytetramethylene structure] of the oxyethylene structure to the oxytetramethylene structure = 55/45), 26.8 parts by mass of dimethylolpropionic acid, and 333.5 parts by mass of methyl ethyl ketone were added under a nitrogen stream and then uniformly mixed. Then, 163.7 parts by mass of dicyclohexylmethane diisocyanate and 0.1 parts by mass of dibutyltin dilaurate were added in that order to the resultant mixture, followed by reaction at 80°C for about 4 hours. As a result, a methyl ethyl ketone solution of a urethane prepolymer (isocyanate group content: 1.8% by mass) having isocyanate groups at the molecular ends was produced.

Next, the methyl ethyl ketone solution of the urethane prepolymer produced by the above-described method was cooled to 40°C, and 20.2 parts by mass of triethylamine was added to neutralize carboxyl groups in the urethane prepolymer. Then, 1441 parts by mass of ion-exchange water and 11.3 parts by mass of isophoronediamine were added in that order to the solution, followed by reaction. After the completion of reaction, methyl ethyl ketone was distilled off under reduced pressure, and ion-exchange water was added so that the nonvolatile content was 35% by mass to produce comparative urethane resin composition 2.

### [COMPARATIVE EXAMPLE 3]

In a four-neck flask provided with a stirrer, a reflux condenser, a thermometer, and a nitrogen blow tube, 200 parts by mass of polyoxytetramethylene glycol (weight-average molecular weight: 2000), 360 parts by mass of polyether polyol composed of a random polymer having an oxyethylene structure and an oxytetramethylene structure (weight-average molecular weight 1800, mass ratio [oxyethylene structure/oxytetramethylene structure] of the oxyethylene structure to the oxytetramethylene structure = 55/45), 20.1 parts by mass of dimethylolpropionic acid, and 395 parts by mass of methyl ethyl ketone were added under a nitrogen stream and then uniformly mixed. Then, 153 parts by mass of dicyclohexylmethane diisocyanate and 0.1 parts by mass of dibutyltin dilaurate were added in that order to the resultant mixture, followed by reaction at 80°C for about 4 hours. As a result, a methyl ethyl ketone solution of a urethane prepolymer (isocyanate group content: 1.0% by mass) having isocyanate groups at the molecular ends was produced.

Next, the methyl ethyl ketone solution of the urethane prepolymer produced by the above-described method was cooled to 40°C, and 15.2 parts by mass of triethylamine was added to neutralize carboxyl groups in the urethane prepolymer. Then, 1707 parts by mass of ion-exchange water and 10.5 parts by mass of piperazine were added in that order to the solution, followed by reaction. After the completion of reaction, methyl ethyl ketone was distilled off under reduced pressure, and ion-exchange water was added so that the nonvolatile content was 35% by mass to produce comparative urethane resin composition 3.

### [COMPARATIVE EXAMPLE 4]

In a four-neck flask provided with a stirrer, a reflux condenser, a thermometer, and a nitrogen blow tube, 350 parts by mass of polyoxytetramethylene glycol (weight-average molecular weight: 2000), 15.8 parts by mass of 1,4-dutanediol, 23.5 parts by mass of dimethylolpropionic acid, and 306 parts by mass of methyl ethyl ketone were added under a nitrogen stream and then uniformly mixed. Then, 179 parts by mass of dicyclohexylmethane diisocyanate and 0.1 parts by mass of dibutyltin dilaurate were added in that order to the resultant mixture, followed by reaction at 80°C for about 4 hours. As a result, a methyl ethyl ketone solution of a urethane prepolymer (isocyanate group content: 1.5% by mass) having isocyanate groups at the molecular ends was produced.

Next, the methyl ethyl ketone solution of the urethane prepolymer produced by the above-described method was cooled to 40°C, and 17.7 parts by mass of triethylamine was added to neutralize carboxyl groups in the urethane prepolymer. Then, 1328 parts by mass of ion-exchange water and 12.2 parts by mass of piperazine were added in that order to the solution, followed by reaction. After the completion of reaction, methyl ethyl ketone was distilled off under reduced pressure, and ion-exchange water was added so that the nonvolatile content was 35% by mass to produce comparative urethane resin composition 4.

### [Production of laminate]

First, 100 parts by mass of the urethane resin composition 1 produced in Example 1, 10 parts by mass of DILACHS-7210 (water-dispersible white pigment, manufactured by DIC Corporation), 4 parts by mass of Hydran Assister CS-7 (water-dispersible carbodiimide-based crosslinking agent, nonvolatile content 40% b mass, manufactured by DIC Corporation), and 0.5 parts by mass of Hydran Assister T5 (association-type thickener, nonvolatile content 50% by mass, manufactured by DIC Corporation) were mixed to prepare a urethane resin composition 1 for forming a surface skin layer. The urethane resin composition 1 for forming a surface skin layer was applied to mold release paper (155T flat, manufactured by Dainippon Ink and Chemicals, Inc.) so that the thickness after application was 50 µm.

After the application, the resin composition was immediately pre-dried at 70°C for 2 minutes using Werner Mathis (dryer) and then dried at 120°C for 2 minutes to completely evaporate water contained in the coating layer, producing a polyurethane resin film.

Then, an aqueous polyurethane adhesive containing 100 parts by mass of Hydran WLA-311 (aqueous polyurethane resin (manufactured by DIC Corporation)), 10 parts by mass of Hydran Assister C5 (polyisocyanate-based crosslinking agent (manufactured by DIC Corporation)), and 1 part by mass of Hydran Assister T1 (association-type thickener (manufactured by DIC Corporation)) was applied to the polyurethane resin film produced by the above-described method so that the thickness was 120 µm, and then dried at 70°C for 2 minutes using Werner Mathis (dryer).

After drying, a nonwoven fabric substrate composed of polyester fibers was laminated to the coated surface, pressure-bonded thereto, followed by curing at 120°C for 2 minutes and further aging at 50°C for 2 days. Then, the mold release paper was removed to produce a laminate 1.

Laminates 2 to 5 and comparative laminates 1 to 5 were produced by the same method as described above except that the urethane resin compositions and the comparative urethane resin compositions produced in Examples 2 to 5 and Comparative Examples 1 to 4, respectively, were used in place of the urethane resin composition 1 produced in Example 1.

In addition, a laminate 6 was produced by the same method as described above using the urethane resin composition 1 produced in example 1 except that 4 parts by mass of Hydran Assister CS-7 (water-dispersible carbodiimide-based crosslinking agent, nonvolatile content 40% by mass, manufactured by DIC Corporation) was not used.

### [Method for evaluating adhesiveness (secondary adhesiveness) of patty material or the like to film surface]

A surface treatment agent containing 100 parts by mass of Crisvon NY-634FT (solvent-type urethane resin, manufactured by DIC Corporation), 35 parts by mass of dimethylformamide, 18 parts by mass of methyl ethyl ketone, and 2.0 parts by mass of Dairack LN-2110 (pigment, manufactured by DIC Corporation) was prepared.

Next, the surface treatment agent was applied to the surface of a surface skin layer of each of the laminates produced as described above using a gravure roll coater and then dried at 120°C for 2 minutes to produce a test laminate including a film formed by using the surface treatment agent on the surface of the surface skin layer constituting each of the laminates.

A hot-melt cloth tape (manufactured by Sun Chemical Co., Ltd.) having a width of 1 inch was bonded at 130°C over 5 seconds to the surface of the film formed by using the surface treatment agent and constituting the test laminate, and then peel strength was measured at a temperature of 23°C and a relative humidity of 65% using Tensilon (head speed = 200 mm/min) according to JIS K6854-2. When the peel strength between the surface skin layer and the film formed using the surface treatment agent was 3.0 kg/cm or more or when the nonwoven fabric material constituting the test laminate was broken, secondary adhesiveness was determined to be enough for practical use.

### [Method for evaluating adhesion between substrate and film]

A hot-melt cloth tape (manufactured by Sun Chemical Co., Ltd.) having a width of 1 inch was bonded at 130°C over 5 seconds to the surface of the film formed by using the surface treatment agent and constituting the test laminate, and then peel strength was measured at a temperature of 23°C and a relative humidity of 65% using Tensilon (head speed = 200 mm/min) according to JIS K6854-2. When the peel strength of the surface skin layer constituting the laminate was 3.0 kg/cm or more or when the nonwoven material constituting the laminate was broken, the film was determined to have adhesion enough for practical use to the substrate composed of the nonwoven fabric.

### [Method for evaluating durability]

### (Moisture-heat resistance)

Each of the laminates was stored in a thermo-hygrostat at a temperature of 75°C and a relative humidity of 95% for 5 weeks, and the surface state of the surface skin layer of the laminate after the storage was visually confirmed. The laminate causing completely no change in the surface of the surface skin layer after immersion was evaluated as "Excellent", the laminate causing a slight tacky feel in only a small portion of the surface of the surface skin layer but no practical problem was evaluated as "Good", the laminate causing dissolution within about a half range of the surface of the surface skin layer or a slightly strong tacky feel was evaluated as "Fair", and the laminate causing significant dissolution in substantially the whole surface of the surface skin layer or a significant tacky feel on touch with fingers was evaluated as "Poor".

### (Hydrolysis resistance)

Each of the laminates was immersed in an aqueous sodium hydroxide solution (10% by mass) adjusted to a temperature of 23°C for 24 hours, and then the surface state of the surface skin layer of the laminate after the immersion was visually confirmed. The laminate causing completely no change in the surface of the surface skin layer after immersion was evaluated as "Excellent", the laminate causing a slight tacky feel in only a small portion of the surface of the surface skin layer but no practical problem was evaluated as "Good", the laminate causing dissolution within about a half range of the surface of the surface skin layer and a slightly strong tacky feel was evaluated as "Fair", and the laminate causing significant dissolution in substantially the whole surface of the surface skin layer and a significant tacky feel on touch with fingers was evaluated as "Poor".

**[Table 1]**

| Table 1 | | Example 1 | Example 2 | Example 3 | Example 4 |
|---|---|---|---|---|---|
| Composition | | Urethane resin composition 1 | Urethane resin composition 2 | Urethane resin composition 3 | Urethane resin composition 4 |
| [Oxyethylene structure (a1-1)/oxytetramethylene structure(a1-2)](mass ratio) | | 55/45 | 55/45 | 55/45 | 55/45 |
| Mass ratio of polyether polyol (a1) in polyol (A) | | 26.5% | 47.5% | 15.3% | 15.3% |
| Crosslinking agent | | Used | Used | Used | Used |
| Laminate | | Laminate 1 | Laminate 2 | Laminate 3 | Laminate 4 |
| Secondary adhesiveness (kg/cm) | | 3.7 | 3.5 | 3.7 | 4.2 |
| Adhesion (kg/cm) | | 3.9 | 3.3 | 3.5 | 3.8 |
| Durability | Moisture-heat resistance | Excellent | Good | Excellent | Excellent |
| | Hydrolysis resistance | Excellent | Good | Excellent | Excellent |

**[Table 2]**

| Table 2 | | Example 5 | Example 6 |
|---|---|---|---|
| Composition | | Urethane resin composition 5 | Urethane resin composition 1 |
| [Oxyethylene structure (a1-1)/oxytetramethylene structure (a1-2)] (mass ratio) | | 75/25 | 55/45 |
| Mass ratio of polyether polyol (a1) in polyol (A) | | 26.5% | 26.5% |
| Crosslinking agent | | Used | Not Used |
| Laminate | | Laminate 5 | Laminate 6 |
| Secondary adhesiveness (kg/cm) | | 3.6 | 3.9 |
| Adhesion (kg/cm) | | 3.8 | 4.1 |
| Durability | Moisture-heat resistance | Good | Excellent |
| | Hydrolysis resistance | Excellent | Excellent |

**[Table 3]**

| Table 3 | | Comparative Example 1 | Comparative Example 2 | Comparative Example 3 | Comparative Example 4 |
|---|---|---|---|---|---|
| Composition | | Comparative urethane resin composition 1 | Comparative urethane resin composition 2 | Comparative urethane resin composition 3 | Comparative urethane resin composition 4 |
| [Oxyethylene structure (a1-1)/oxytetramethylene structure (a1-2)](mass ratio) | | 100/0 | 55/45 | 55/45 | - |
| Mass ratio of polyether polyol (a1) in polyol (A) | | 20.0% | 6.7% | 64.3% | 0% |
| Crosslinkinq agent | | Used | Used | Used | Used |
| Laminate | | Comparative laminate 1 | Comparative laminate 2 | Comparative laminate 3 | Comparative laminate 4 |
| Secondary adhesiveness (kg/cm) | | 2.4 | 2.2 | 3.2 | 0.8 |
| Adhesion (kg/cm) | | 3.2 | 2.3 | 3.6 | 1.0 |
| Durability | Moisture-heat resistance | Good | Good | Poor | Good |
| | Hydrolysis resistance | Poor | Poor | Poor | Good |

In Tables 1 to 3, "[Oxyethylene structure (a1-1)/oxytetramethylene structure (a1-2)] (mass ratio)" represents the mass ratio of the oxyethylene structure (a1-1) to the oxyalkylene structure (a1-2) constituting the polyether polyol (a1).

In Tables 1 to 3, "Mass ratio of polyether polyol (a1) in polyol (A)" represents the mass ratio of the polyether polyol (a1) in the total amount of the polyol (A) used for producing the urethane resin (C).

## Claims

1. A leather-like sheet comprising a fibrous substrate (E) layer, a surface skin layer formed by using a urethane resin composition, and, if required, an intermediate layer disposed between the fibrous substrate (E) layer and the surface skin layer, said urethane resin composition comprising a urethane resin (C) dispersed or dissolved in an aqueous medium (D) and produced by reacting a polyol (A) with a polyisocyanate (B), wherein said polyisocyanate (B) is isophorone diisocyanate and/or dicyclohexylmethane diisocyanate, the polyol (A) containing a polyether polyol (a1) which has an oxyethylene structure (a1-1) and an oxytetramethylene structure (a1-2), and a polyoxytetramethylene glycol (a2) and/or a polycarbonatediol (a3), wherein the polyether polyol (a1) has a ratio by mass [(a1-1)/(a1-2)] of the oxyethylene structure (a1-1) to the oxytetramethylene structure (a1-2) in a range of 3/7 to 9/1, and the ratio by mass of the polyether polyol (a1) is 10% by mass to 50% by mass relative to the total amount of the polyol (A), wherein the urethane resin (C) has an anionic group.

2. The leather-like sheet according to Claim 1, wherein in the urethane resin composition, the oxytetramethylene structure (a1-2) is a structure derived from tetrahydrofuran.

3. The leather-like sheet according to Claim 1, wherein in the urethane resin composition, the polyether polyol (a1) is a random copolymer composed of the oxyethylene structure (a1-1) and the oxytetramethylene structure (a1-2).

4. The leather-like sheet according to Claim 1, wherein in the urethane resin composition, the polyether polyol (a1) has a weight-average molecular weight of 500 to 5000.

## Patentansprüche

1. Lederartige Folie, die Folgendes umfasst: eine Fasersubstratschicht (E), eine Oberflächenhautschicht, gebildet unter Verwendung einer Urethanharzzusammensetzung, und gegebenenfalls eine zwischen der Fasersubstratschicht (E) und der Oberflächenhautschicht angeordnete Zwischenschicht, wobei die Urethanharzzusammensetzung ein in einem wässrigen Medium (D) dispergiertes oder gelöstes, und durch Umsetzung eines Polyols (A) mit einem Polyisocyanat (B) hergestelltes Urethanharz (C) umfasst, wobei das Polyisocyanat (B) Isophorondiisocyanat und/oder Dicyclohexylmethandiisocyanat ist, das Polyol (A) ein Polyetherpolyol (a1), welches eine Oxyethylenstruktur (a1-1) und eine Oxytetramethylenstruktur (a1-2) aufweist, und ein Polyoxytetramethylenglycol (a2) und/oder ein Polycarbonatdiol (a3) enthält, wobei das Polyetherpolyol (a1) ein Massenverhältnis [(a1-1)/(a1-2)] der Oxyethylenstruktur (a1-1) zur Oxytetramethylenstruktur (a1-2) in einem Bereich von 3/7 bis 9/1 aufweist, und das Massenverhältnis des Polyetherpolyols (a1) 10 Massen-% bis 50 Massen-%, bezogen auf die Gesamtmenge an Polyol (A) beträgt, wobei das Urethanharz (C) eine anionische Gruppe aufweist.

2. Lederartige Folie gemäß Anspruch 1, wobei in der Urethanharzzusammensetzung die Oxytetramethylenstruktur (a1-2) eine von Tetrahydrofuran abgeleitete Struktur ist.

3. Lederartige Folie gemäß Anspruch 1, wobei in der Urethanharzzusammensetzung das Polyetherpolyol (a1) ein Random-Copolymer ist, bestehend aus der Oxyethylenstruktur (a1-1) und der Oxytetramethylenstruktur (a1-2).

4. Lederartige Folie gemäß Anspruch 1, wobei in der Urethanharzzusammensetzung das Polyetherpolyol (a1) ein gewichtsmittleres Molekulargewicht von 500 bis 5000 aufweist.

## Revendications

1. Feuille de type cuir comprenant une couche de substrat fibreux (E), une couche de revêtement de surface formée en utilisant une composition de résine d'uréthane, et, si nécessaire, une couche intermédiaire disposée entre la couche de substrat fibreux (E) et la couche de revêtement de surface, ladite composition de résine d'uréthane comprenant une résine d'uréthane (C) dispersée ou dissoute dans un milieu aqueux (D) et produite en faisant réagir un polyol (A) avec un polyisocyanate (B), dans laquelle ledit polyisocyanate (B) est du diisocyanate d'isophorone et/ou du diisocyanate de dicyclohexylméthane, le polyol (A) contenant un polyol de polyéther (a1) qui a une structure oxyéthylène(a1-1) et une structure oxytétraméthylène(a1-2), et un polyoxytétraméthylène glycol (a2) et/ou un polycarbonatediol (a3), dans laquelle le polyol de polyéther (a1) a un rapport massique [(a1-1)/(a1-2)] de la structure oxyéthylène (a1-1) sur la structure oxytétraméthylène (a1-2) dans une plage de 3/7 à 9/1, et la proportion massique du polyol de polyéther (a1) est de 10 % en masse à 50 % en masse par rapport à la quantité totale du polyol (A), dans laquelle la résine d'uréthane (C) a un groupe anionique.

2. Feuille de type cuir selon la revendication 1, dans laquelle dans la composition de résine d'uréthane, la structure oxytétraméthylène (a1-2) est une structure dérivée du tétrahydrofurane.

3. Feuille de type cuir selon la revendication 1, dans laquelle dans la composition de résine d'uréthane, le polyol de polyéther (a1) est un copolymère aléatoire composé de la structure oxyéthylène (a1-1) et de la structure oxytétraméthylène (a1-2).

4. Feuille de type cuir selon la revendication 1, dans laquelle dans la composition de résine d'uréthane, le polyol de polyéther (a1) a une masse moléculaire moyenne en poids de 500 à 5000.
